# EUROPÄISCHE PATENTSCHRIFT

(11) **EP 3 025 041 B1**
(45) Veröffentlichungstag und Bekanntmachung des Hinweises auf die Patenterteilung: **04.01.2017**
(21) Anmeldenummer: 15770883.5
(22) Anmeldetag: 28.09.2015
(51) Int. Cl.: F02B 63/04, B60K 6/24, F02B 67/06, F01B 1/10, F02B 75/22, F02B 75/18

(54) **STROMAGGREGAT**
POWER UNIT
GROUPE ÉLECTROGÈNE

(30) Priorität: 16.10.2014 DE 102014115042
(43) Veröffentlichungstag der Anmeldung: 01.06.2016
(73) Patentinhaber: Obrist Technologies GmbH, 6890 Lustenau (AT)
(72) Erfinder: LAIMBOECK, Franz, A-8051 Thal (AT); OBRIST, Frank, A-6900 Bregenz (AT); KONNO, Tsuneo, Tokyo, 107-0061 (JP)
(74) Vertreter: Kilchert, Jochen
(86) Internationale Anmeldenummer: PCT/EP2015/072197
(87) Internationale Veröffentlichungsnummer: WO 2016/058810

(56) Entgegenhaltungen:
- WO-A1-2012/056275
- WO-A1-2012/163902
- WO-A2-2013/137858
- GB-A- 682 881
- US-A1- 2009 107 426

## Beschreibung

Die Erfindung betrifft ein Stromaggregat, insbesondere für ein Hybridfahrzeug, mit einem Hubkolbenmotor und mit mindestens einem mit diesem antriebsverbindbaren Generator, wobei der Hubkolbenmotor wenigstens zwei Kolben, die in wenigstens zwei Zylindern in Tandem-Anordnung geführt sind, und zwei mit den Kolben durch Pleuel verbundene, gegenläufig angetriebene Kurbelwellen aufweist, die mechanisch phasengleich gekoppelt sind.

Aus der WO 2012/056 275 A1 ist eine Maschinenkombination mit einer Verbrennungskraftmaschine und einem Generator für die Aufladung der Batterie eines Hybridantriebs bekannt. Die Verbrennungskraftmaschine ist als paarweise angeordnete Zylinder-Kolbeneinheit ausgeführt, wobei die beiden Kolben über Pleuelstangen mit je einer eigenen Kurbelwelle in Antriebsverbindung stehen. Der in Reihe mit den Zylinder-Kolbeneinheiten angeordnete Generator wird von den Kurbelwellen angetrieben.

Der Erfindung liegt die Aufgabe zu Grunde, ein Stromaggregat der eingangs genannten Bauweise so zu verbessern, dass eine besonders ruhige - geräuscharme und vibrationsfreie - Arbeitsweise sowohl des Motors als auch der gesamten Einheit erreichbar ist und darüber hinaus neben einem besonders einfachen und besonders raumsparenden Aufbau eine Konstruktion mit geringen Reibungsverlusten, geringer Verschleißanfälligkeit erreichbar ist, die für den Intervallbetrieb eines Hybridantriebs besonders geeignet ist. Der Erfindung liegt ferner die Aufgabe zu Grunde, ein Fahrzeug mit einem derartigen Stromaggregat anzugeben.

Diese Aufgabe wird erfindungsgemäß mit Blick auf das Stromaggregat durch den Gegenstand des Anspruchs 1 und mit Blick auf das Fahrzeug durch den Gegenstand des Anspruchs 18 gelöst.

Die Erfindung beruht auf dem Gedanken, ein Stromaggregat, insbesondere für ein Hybridfahrzeug, mit einem Hubkolbenmotor und mit einem mit diesem antriebsverbindbaren Generator anzugeben. Der Hubkolbenmotor weist wenigstens zwei Kolben auf, die in wenigstens zwei Zylindern in Tandem-Anordnung geführt sind. Der Hubkolbenmotor weist ferner zwei mit den Kolben durch Pleuel verbundene, gegenläufige Kurbelwellen auf, die mechanisch phasengleich gekoppelt sind. Erfindungsgemäß sind ein erster Generator durch die erste Kubelwelle und ein zweiter Generator durch die zweite Kurbelwelle antreibbar.

Die Verwendung von zwei Generatoren eröffnet neue Möglichkeiten für den Ausgleich freier Massenkräfte und Wechseldrehmomente, so dass die Laufruhe des Kolbenmotors verbessert wird. Ferner können kleinere Generatoren verwendet werden.

Vorzugsweise sind die Generatoren mit der jeweiligen Kurbelwelle durch ein Zahnradgetriebe oder durch ein Zugmittel verbunden. Die Verbindung durch ein Zugmittel, insbesondere ein beidseitig verzahntes Zugmittel, verbessert den geräuscharmen Betrieb.

Bei einer bevorzugten Ausführungsform drehen der erste Generator und die zweite Kurbelwelle gegenläufig. Der zweite Generator und die erste Kurbelwelle drehen ebenfalls gegenläufig. Die Generatoren und die Kurbelwellen drehen mit einem Drehzahlverhältnis von 2:1. Die Generatoren weisen jeweils mindestens eine Unwucht auf und dienen so als Ausgleichswellen. Diese Ausführung hat den Vorteil, dass die Generatoren eine Doppelfunktion übernehmen. Zum einen dienen sie der Stromerzeugung. Zum anderen gleichen die Generatoren Massenkräfte der 2. Ordnung aus. Die Generatoren wirken somit nach dem Prinzip des Lanchester-Ausgleichs. Wenn zwei Gegengewichte jeweils als Unwucht vorgesehen sind, können diese je nach Lage des Generators gleich schwer oder unterschiedlich schwer ausgebildet sein, um ein unerwünschtes Moment um die Längsachse des Motors auszugleichen.

In einer Weiterbildung dieser Ausführung weist jeder Generator zwei Gegengewichte auf, die in Längsrichtung des Generators voneinander beabstandet sind. Konkret sind die beiden Gegengewichte an den beiden Axialenden des Generators angebracht. Die beiden Gegengewichte sind jeweils gleichschwer. Durch diese Anordnung werden unerwünschte Momente ausgeglichen.

Für die Kopplung der Generatoren mit der jeweiligen Kurbelwelle bestehen verschiedene Möglichkeiten. Beispielsweise kann das Zahnradgetriebe eine gezahnte Kurbelwange umfassen, die mit einem Antriebsritzel des jeweiligen Generators in Eingriff steht bzw. gekoppelt ist. Das Zahnradgetriebe kann alternativ wenigstens ein Zahnrad umfassen, das mit einem über das Hauptlager vorstehenden Wellenzapfen der entsprechenden Kurbelwelle drehfest verbunden und mit dem Antriebsritzel des jeweiligen Generators gekoppelt ist. Als Zugmittel kommen eine Kette oder eine Zahnkette oder ein Zahnriemen in Frage, die durch Kettenräder angetrieben sind.

Bei einer bevorzugten Ausführung verbindet ein erstes Zugmittel den ersten Generator mit der ersten Kurbelwelle und ein zweites Zugmittel den zweiten Generator mit der zweiten Kurbelwelle. Die Zugmittel sind bei dieser Ausführung relativ kurz, was deren Führung erleichtert.

Vorzugsweise sind die Generatoren auf beiden Seiten neben den Kurbelwellen angeordnet, wobei die Kurbelwellenachsen durch die Hauptlager eine virtuelle Referenzebene aufspannen. Die Generatorachsen können entweder in der Referenzebene oder außerhalb der Referenzebene und zwar zwischen den Kurbelwellen und dem oberen Totpunkt der Kolben angeordnet sein. Die Anordnung der Generatorenwellen in der Referenzebene oder außerhalb der Referenzebene führt zu Vorteilen bei der Einbaulage des Stromaggregats im Motor. Die Anordnung der Generatorachsen oberhalb der Referenzebene hat darüber hinaus den Vorteil, dass der Motor relativ schmal ist.

Vorzugsweise weisen die Kurbelwellen Gegengewichte auf, die phasenverschoben angeordnet sind, um freie Massenkräfte auszugleichen.

Zusätzlich - auch um eine kompaktere Bauweise und eine Verminderung von Reibungsverlusten zu erreichen - können die Zylinder mit einer nach innen gerichteten Schränkung so angeordnet werden, dass sie einen geringeren Abstand voneinander haben, als dem Abstand der Kurbelwellen entspricht. Die Schränkung der Zylinder verläuft somit in Richtung auf die Gegendruckseite. Damit wird erreicht, dass die Pleuel im Moment der größten Krafteinwirkung eine etwas steilere Position in Bezug auf die Kolben-/Zylinder-Achse aufweisen, so dass an den Kolben bzw. an den Zylindern entsprechend geringere, die Kolbenreibung und den Zylinderverschleiß beeinflussende Kräfte auftreten.

Besonders vorteilhaft ist es, den Hubkolbenmotor mit einem Zündabstand von 0° Kurbelwinkel im 4-Takt-Betrieb zu betreiben.

Für die Synchronisation der Kurbelwellen ist es vorteilhaft, dass diese verzahnte Kurbelwangen aufweisen, die miteinander in Eingriff sind. Alternativ kann für die Synchronisierung ein beidseitig verzahntes Zugmittel, insbesondere ein beidseitig verzahnter Zahnriemen vorgesehen sein, der die beiden Kurbelwellen miteinander koppelt, wobei eine erste Seite des Zahnriemens mit der ersten Kurbelwange und eine zweite Seite, insbesondere ein Rücken des Zahnriemens mit der zweiten Kurbelwange in Eingriff ist. Die Verwendung des Zugmittels dämpft die Geräuschentwicklung. Um die Belastung der Zahnpaare zu verringern, kann vorgesehen sein, dass der beidseitig verzahnte Zahnriemen die erste Kurbelwange umschlingt, wobei der Zahnriemen beidseitig 1 bis 5 Zähne, insbesondere 4 Zähne, mehr als die Verzahnung der zweiten Kurbelwange aufweist. Die zusätzliche Zahnzahl erlaubt ein Abheben des Zahnriemens und ein Überholen des Zahnrades innerhalb des gelüfteten Zahnriemens. Dazu sollte sich der Zahnriemen mehr als die Zahnfußhöhe radial über den Kopfkreis des Zahnrades hinaus erheben. Die Fliehkraft unterstützt dieses Abheben. Motivation dafür ist die Vermeidung der Wiederkehr der Höchstbelastung auf denselben Zähnen des beidseitig verzahnten Zahnriemens, z.B. bei Übertragung der Zündkraft bei einem Viertakt-Betrieb mit 360° Zündabstand.

Bei einer alternativen Ausführung kann die phasengleiche Kopplung der Kurbelwellen durch Zahnräder erfolgen, die miteinander in Eingriff sind, wobei die Zahnräder zwischen den Hauptlagern der Kurbelwellen oder an den über die jeweiligen Hauptlager vorstehenden Wellenzapfen der Kurbelwellen angeordnet sind. Die Zahnräder können geradverzahnte oder schrägverzahnte Stirnräder oder verspannte Zahnräder (scissor gears oder hunting gears) sein. Bei einer Ausführung des Hubkolbenmotors mit vier Kolben kann sich eine Anordnung als Quadrat (square-four) als besonders vorteilhaft erweisen, wenn jeweils zwei Kolben bei einem Kurbelzapfenversatz von 270° durch Pleuel mit derselben Kurbelwelle verbunden sind. Mit anderen Worten wird eine Tandem-Anordnung der Zylinder so verdoppelt, dass sich die vorstehend genannte Quadrat-Anordnung ergibt, wobei jeweils zwei Zylinder pro Kurbelwelle in Reihe angeordnet sind. Eine Kurbelwelle mit 270° Kurbelzapfenversatz erzeugt keine Massenkräfte zweiter Ordnung sondern Momente zweiter Ordnung, die in der Zylinderachsenebene wirken. Beim gleichzeitigen Erreichen der Totlage der diagonal gegenüberliegend angeordneten Kolben des "Square Four" heben sich die Momente beider Kurbelwellen daher auf. Es sind somit keine weiteren Ausgleichsmaßnahmen für die Kräfte oder Momente zweiter Ordnung erforderlich.

Die Zylinderanordnung - sowohl in Tandem, als auch in "square-four"-Form - kann parallel zueinander oder zueinander geneigt mit einem Neigungswinkel zwischen 1° bis 15°, vorzugsweise zwischen 4° bis 8°, pro Zylinder betragen.

Bei einer weiteren Variante der Erfindung ist vorgesehen, dass jeder Zylinder mit einem Auslasskanal fluidverbunden ist, wobei die Auslasskanäle der Zylinder in einen gemeinsamen zentralen Abgaskanal münden. Die Auslasskanäle können identische Längen aufweisen. Der zentrale Abgaskanal ist vorzugsweise in einer Motormittelebene angeordnet. Die Motormittelebene verläuft zwischen den Zylindern parallel zu den Kurbelwellenachsen und weist zu den Kurbelwellenachsen jeweils den gleichen Abstand auf. Durch diese Gestaltung der Auslasskanäle wird vorteilhaft erreicht, dass die Strecke zwischen den Zylindern, insbesondere den Auslassventilen, und einem Zusatzaggregat, beispielsweise eine Turbine eines Abgasturboladers, vergleichsweise kurz gestaltet werden kann. So kann verhältnismäßig viel der verfügbaren Enthalpie für den Betrieb des Zusatzaggregats zur Verfügung gestellt werden. Zudem kann auf einen herkömmlichen, vergleichsweise schweren, Auspuffkrümmer verzichtet werden. Dies reduziert das Gewicht des Hubkolbenmotors. Ferner kann die aufwändige Anbindung des Auspuffkrümmers am Zylinderkopf vermieden werden und der Zylinderkopf baut daher kompakt. Im zentralen Abgaskanal kann ein luftspaltisolierter Portliner angeordnet sein.

An den zentralen Abgaskanal kann sich ein Abgasturbolader direkt anschließen. Dieser wird auf diese Weise mit einer hohen Effizienz betrieben und erhöht die Leistung des Hubkolbenmotors.

Die Erfindung wird nachfolgend anhand von Ausführungsbeispielen unter Bezug auf die beigefügten schematischen Zeichnungen mit weiteren Einzelheiten näher erläutert.

Es zeigt
- Fig. 1: eine Vorderansicht eines Stromaggregats mit V-förmig angeordneten Generatoren;
- Fig. 2: eine Vorderansicht eines Stromaggregat nach einem erfindungsgemäßen Ausführungsbeispiel mit horizontal angeordneten Generatoren;
- Fig. 3: eine Schnittansicht des Zylinderkopfs des Stromaggregats gemäß Fig. 1 oder Fig. 2 mit einem Abgasturbolader;
- Fig. 4: eine schematische Darstellung der über einen beidseitig verzahnten Zahnriemen geräuscharm gekoppelten Kurbelwellen.

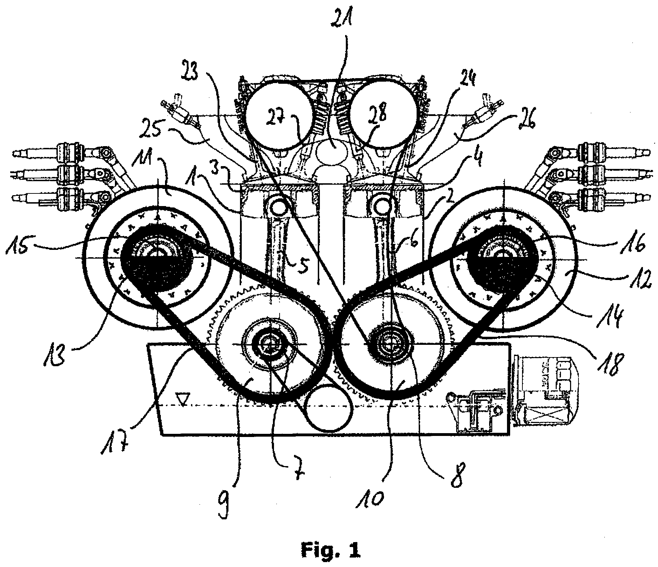

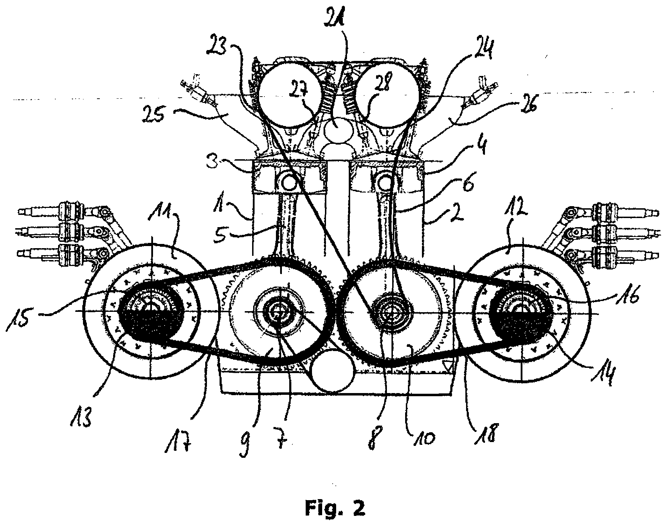

Das schematisch dargestellte Stromaggregat nach den erfindungsgemäßen Ausführungsbeispielen gemäß den Fig. 1 und 2 weist zwei in Tandemform angeordnete Zylinder 1 und 2 (siehe Fig. 1) auf, in denen Kolben geführt sind und z.B. im Vier-Takt-Betrieb über Pleuel 5 bzw. 6 jeweils eine Kurbelwelle 7 und 8 antreiben. Auf den Kurbelwellen 7, 8 sind Zahnräder 9 bzw. 10 (siehe Fig. 2) angeordnet, die miteinander in Eingriff stehen und so für einen gegenläufigen Antrieb der mechanisch phasengleich gekoppelten Kurbelwellen 7 bzw. 8 Sorge tragen. Vorzugsweise sind die Zahnräder 9 bzw. 10 zwischen den Hauptlagern der Kurbelwellen (Hauptlager nicht dargestellt) oder an über die jeweiligen Hauptlager vorstehenden Wellenzapfen (ebenfalls in der Zeichnung nicht dargestellt) der Kurbelwelle angeordnet. Die Zahnräder können als gerade- oder schrägverzahnte Stirnräder oder auch als verspannte Zahnräder ausgeführt sein.

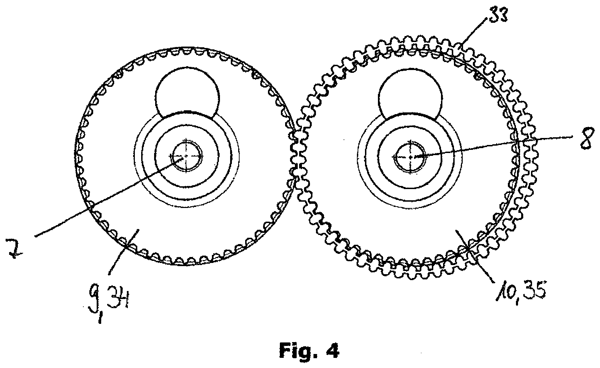

Alternativ kann die Antriebskoppelung der Kurbelwellen 7 und 8 auch über verzahnte Kurbelwangen erfolgen, die zur Koppelung der Kurbelwellen 7 und 8 direkt miteinander in Eingriff stehen. Eine weitere, in Fig. 4 schematische veranschaulichte, Alternative wird darin gesehen, dass die Koppelung der Kurbelwellen über einen beidseitig verzahnten Zahnriemen 33 erfolgt, wobei es zur Verschleißminderung und zum ruhigen Lauf besonders vorteilhaft ist, die Verzahnung des Zahnriemens 33 gegenüber der Verzahnung der Zahnräder 9, 10 mit unterschiedlicher Zähnezahl vorzusehen. Insbesondere kann der Zahnriemen 33 beidseitig 1 bis 5, vorzugsweise 4, Zähne mehr aufweisen, als die Zahnräder 9 bzw. 10 der Kurbelwellen 7 und 8. Das bewirkt, dass in den Totpunkten des Kolbenlaufs jeweils unterschiedliche Zähne des Zahnriemens 33 mit den Zähnen der Zahnräder 9 bzw. 10 der Kurbelwellen 7 und 8 im Eingriff stehen. Somit wird vermieden, dass Gaswechselkräfte immer auf dieselbe Zahnpaarung wirken. Es ist auch möglich, den beidseitig verzahnten Zahnriemen 33 zur geräuscharmen Koppelung der Kurbelwellen 7, 8 in Verbindung mit verzahnten Kurbelwangen 34, 35 einzusetzen.

In der Zeichnung nicht dargestellt, aber für den Fachmann ohne weiteres verständlich nachvollziehbar, können die in der zeichnerischen Darstellung nach Fig. 1 mit zueinander parallelen Achsen angeordneten Zylinder eine nach innen gerichtete Schränkung aufweisen, so dass der Achsabstand der Zylinder voneinander geringer ist, als der Abstand zwischen den Achsen der beiden Kurbelwellen 7 und 8. Mit dieser zur Gegendruckseite geschränkten Anordnung der Zylinder wird nicht nur eine kompakte Bauweise, sondern vor allem auch über die Pleuel 5 bzw. 6 und deren im Betrieb unterschiedliche bzw. geringere Schrägstellung infolge der Schränkung geringere Krafteinleitung in die Kolben und damit ein leichterer und verschleißmindernder Lauf der Kolben in den Zylindern erreicht.

Die Ausführungsbeispiele gemäß den Fig. 1 und 2 unterscheiden sich in der Anordnung der beiden Generatoren. Gemäß Fig. 1 sind die Generatoren 11, 12 V-förmig zusammen mit den entsprechenden Kurbelwellen 7, 8 angeordnet, wobei der Abstand der Mittelachsen der Generatoren 11, 12 größer als der Achsabstand der Kurbelwellen 7, 8 ist. In Fig. 2 sind die Generatoren 11, 12 in derselben Horizontalebene wie die Kurbelwellen 7, 8 angeordnet. Die vorstehenden und nachstehenden Erläuterungen zum Aufbau des Hubkolbenmotors gelten für beide Ausführungen.

Die Generatoren 11, 12 zeichnen sich jeweils dadurch aus, dass diese Ausgleichsgewichte 13, 14 aufweisen. Die Ausgleichsgewichte 13, 14 sind, wie in den Figuren zu sehen ist, bei oberer Totpunktlage der Kolben 3, 4 winkelgleich, d.h. nicht zueinander verdreht, angeordnet. Die Ausgleichsgewichte 13, 14 sind in die Antriebswellen oder die Antriebsritzel 15, 16 der beiden Generatoren 11, 12 integriert. Dies kann beispielsweise durch exzentrisch angeordnete Gewichte erfolgen, die mit dem jeweiligen Antriebsritzel 15, 16 bzw. der Antriebswelle verbunden sind. Nicht dargestellt sind in den Figuren komplementär angeordneten Gegengewichte auf der anderen Generatorseite, die dem Ausgleich von Momenten um die Querachse des Hubkolbenmotors dienen. Die Ausgleichsgewichte 13, 14 bewirken einen Ausgleich der Massenkräfte zweiter Ordnung, wodurch die Laufruhe des Hubkolbenmotors signifikant verbessert wird. Der Antrieb der beiden Generatoren 11, 12 erfolgt durch Zahnriemen bzw. allgemein Zugmittel 17, 18, die entweder mit einer Kurbelwange in der jeweiligen Kurbelwelle 7, 8 einerseits und mit dem Antriebsritzel 15, 16 des jeweiligen Generators 11, 12 andererseits in Eingriff sind. Anstelle der verzahnten Kurbelwangen können auch Kettenräder mit den Kurbelwellen drehfest verbunden sein, die für die Übertragung der Momente auf das Zugmittel sorgen.

Der Antrieb der in Fig. 1 dargestellten Nockenwellen erfolgt durch ein mit der zweiten Kurbelwelle 8 verbundenes Abtriebsrad, das über ein Zugmittel mit den beiden Nockenwellen verbunden ist. Des Weiteren ist eine Ölpumpe vorgesehen, die durch die andere, d.h. die erste Kurbelwelle 7 angetrieben wird, und zwar durch ein Zugmittel.

Die vorstehenden Ausführungen gelten entsprechend für das Ausführungsbeispiel gemäß Fig. 2.

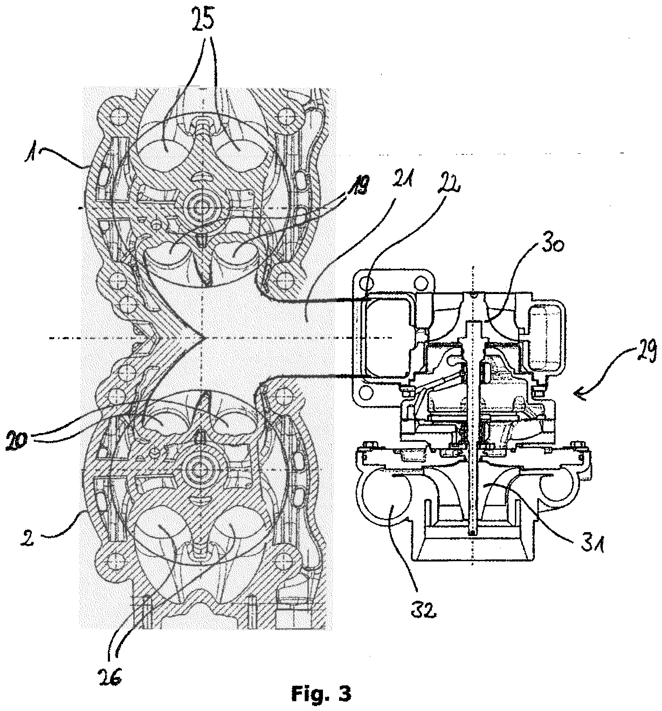

Beide nach den in den Figuren 1 und 2 gezeigten Ausführungsbeispielen gestalteten Stromaggregate können im Bereich von Zylinderköpfen des Hubkolbenmotors Auslasskanäle 19, 20 aufweisen, die mit den Zylindern 1, 2 fluidverbunden sind. Die Auslasskanäle 19, 20 können in einen gemeinsamen Abgaskanal 21 münden. Die beispielhafte Anordnung der Auslasskanäle 19, 20 und des Abgaskanals 21 ist in Fig. 3 dargestellt.

Die Auslasskanäle 19, 20 weisen jeweils identische Längen auf, so dass der Abgaskanal 21 im Wesentlichen mittig zwischen den Zylindern 1, 2 bzw. mittig zwischen Zylinderköpfen der Zylinder 1, 2 angeordnet ist. Im Zylinderkopf sind jeweils Einlassventile 23, 24 angeordnet, die das Einströmen eines Treibstoffgemischs von Einlasskanälen 25, 26 in die Zylinder 1, 2 steuern. Den Auslasskanälen 19, 20 sind Auslassventile 27, 28 zugeordnet, die das Ausströmen eines Verbrennungsgasgemischs von den Zylindern 1, 2 in die Auslasskanäle 19, 20 und somit weiter in den Abgaskanal 21 steuern. Der Abgaskanal 21 endet an einem Kanalaustritt 22.

An den Kanalaustritt 22 kann ein Abgasturbolader 29 angeschlossen sein. Der Abgasturbolader ist vorzugsweise direkt an den Kanalaustritt 22 angeflanscht. Eine Turbine 30 des Abgasturboladers 29 liegt dabei im Auslassstrom des aus dem Abgaskanal 21 ausströmenden Verbrennungsgases und treibt einen Verdichter 31 an, der in einem Luftführungskanal 32 des Hubkolbenmotors angeordnet ist.

### Bezugszeichenliste

- 1, 2: Zylinder
- 3, 4: Kolben
- 5, 6: Pleuel
- 7, 8: Kurbelwelle
- 9, 10: Zahnräder
- 11, 12: Generatoren
- 13, 14: Ausgleichsgewichte
- 15, 16: Antriebsritzel
- 17, 18: Zugmittel
- 19, 20: Auslasskanäle
- 21: Abgaskanal
- 22: Kanalaustritt
- 23, 24: Einlassventile
- 25, 26: Einlasskanäle
- 27, 28: Auslassventile
- 29: Abgasturbolader
- 30: Turbine
- 31: Verdichter
- 32: Luftführungskanal
- 33: Zahnriemen
- 34, 35: Kurbelwangen

## Patentansprüche

1. Stromaggregat, insbesondere für ein Hybridfahrzeug, mit einem Hubkolbenmotor und mit einem mit diesem antriebsverbindbaren Generator, wobei der Hubkolbenmotor wenigstens zwei Kolben (3, 4), die in wenigstens zwei Zylindern (1, 2) in Tandem-Anordnung geführt sind, und zwei mit den Kolben (3, 4) durch Pleuel (5, 6) verbundene, gegenläufige Kurbelwellen (7, 8) aufweist, die mechanisch phasengleich gekoppelt sind, **dadurch gekennzeichnet, dass** ein erster Generator (11) durch die erste Kurbelwelle (7) und ein zweiter Generator (12) durch die zweite Kurbelwelle (8) angetrieben ist.

2. Stromaggregat nach Anspruch 1,
**dadurch gekennzeichnet, dass**
die Generatoren (11, 12) mit der jeweiligen Kurbelwelle (7, 8) durch ein Zahnradgetriebe oder durch ein Zugmittel verbunden sind.

3. Stromaggregat nach Anspruch 1 oder 2,
**dadurch gekennzeichnet, dass**
der erste Generator (11) und die zweite Kurbelwelle (8) sowie der zweite Generator (12) und die erste Kurbelwelle (7) jeweils gegenläufig mit einem Drehzahlverhältnis von 2:1 drehen, wobei die Generatoren (11, 12) jeweils mindestens eine Unwucht (13, 14) aufweisen und als Ausgleichswellen wirken.

4. Stromaggregat nach einem der Ansprüche 2 oder 3,
**dadurch gekennzeichnet, dass**
das Zahnradgetriebe eine verzahnte Kurbelwange umfasst, die mit einem Antriebsritzel (15, 16) des jeweiligen Generators (11, 12) gekoppelt ist; oder dass
das Zahnradgetriebe wenigstens ein Zahnrad umfasst, das mit einem über das Hauptlager vorstehenden Wellenzapfen der entsprechenden Kurbelwelle (7, 8) drehfest verbunden und mit einem Antriebsritzel des jeweiligen Generators (11, 12) gekoppelt ist;
oder dass
das Zugmittel eine Kette oder eine Zahnkette oder einen Zahnriemen umfasst.

5. Stromaggregat nach Anspruch 4,
**dadurch gekennzeichnet, dass**
ein erstes Zugmittel (17) den ersten Generator (11) mit der ersten Kurbelwelle (7) und ein zweites Zugmittel (18) den zweiten Generator (12) mit der zweiten Kurbelwelle (8) verbindet.

6. Stromaggregat nach einem der vorhergehenden Ansprüche,
**dadurch gekennzeichnet, dass**
die Generatoren (11, 12) auf beiden Seiten neben den Kurbelwellen (7, 8) angeordnet sind, die Kurbelwellenachsen durch die Hauptlager eine virtuelle Referenzebene aufspannen und die Generatorachsen in der Referenzebene oder oberhalb der Referenzebene zwischen den Kurbelwellen und dem oberen Totpunkt der Kolben (3, 4) angeordnet sind.

7. Stromaggregat nach einem der vorhergehenden Ansprüche,
**dadurch gekennzeichnet, dass**
die Zylinder (1, 2) zur Gegendruckseite geschränkt sind und die Kurbelwellen (7, 8) Gegengewichte aufweisen, die phasenverschoben angeordnet sind.

8. Stromaggregat nach einem der vorhergehenden Ansprüche,
**dadurch gekennzeichnet, dass**
der Zündabstand 0° Kurbelwinkel, insbesondere im 4-Taktbetrieb, beträgt.

9. Stromaggregat nach einem der vorhergehenden Ansprüche,
**dadurch gekennzeichnet, dass**
die Kurbelwellen (7, 8) verzahnte Kurbelwangen aufweisen, die zur Koppelung der Kurbelwellen (7, 8) miteinander in Eingriff stehen; oder dass
die Kurbelwellen (7, 8) Zahnräder aufweisen, die zur Kopplung der Kurbelwellen (7, 8) miteinander in Eingriff sind, wobei die Zahnräder zwischen den Hauptlagern der Kurbelwellen (7, 8) oder an den über die jeweiligen Hauptlager vorstehenden Wellenzapfen der Kurbelwellen (7, 8) angeordnet sind.

10. Stromaggregat nach einem der vorhergehenden Ansprüche,
**dadurch gekennzeichnet, dass**
vier Kolben in vier Zylindern in Quadrat-Anordnung (square-four) geführt sind, von denen jeweils zwei Kolben durch Pleuel mit derselben Kurbelwelle verbunden sind, wobei der Kurbelzapfenversatz 270° beträgt und diagonal gegenüberliegend angeordnete Kolben (3, 4) gleichzeitig die Totlage erreichen.

11. Stromaggregat nach einem der vorhergehenden Ansprüche,
**dadurch gekennzeichnet, dass**
jeder Zylinder (1, 2) mit einem Auslasskanal (19, 20) fluidverbunden ist, wobei die Auslasskanäle (19, 20) der Zylinder (1, 2) in einen gemeinsamen zentralen Abgaskanal (21) münden.

12. Stromaggregat nach Anspruch 11,
**dadurch gekennzeichnet, dass**
an den Abgaskanal (21) ein Abgasturbolader (29), insbesondere direkt, angeschlossen ist.

13. Stromaggregat nach einem der Ansprüche 4 bis 12,
**dadurch gekennzeichnet, dass**
die Kurbelwellen (7, 8) Zahnräder (9, 10) oder verzahnte Kurbelwangen (34, 35) aufweisen, die zur Koppelung der Kurbelwellen (7, 8) über einen beidseitig verzahnten Zahnriemen (33) miteinander drehverbunden sind, wobei der Zahnriemen (33) eines der Zahnräder (9, 10) oder eine der Kurbelwangen (34, 35) umschlingt.

14. Stromaggregat nach Anspruch 13,
**dadurch gekennzeichnet, dass**
der beidseitig verzahnte Zahnriemen (33) 2 bis 4 Zähne mehr als die Verzahnung des Zahnrads (10) oder der Kurbelwange (35) der zweiten Kurbelwelle (8) aufweist.

15. Fahrzeug, insbesondere Hybridfahrzeug, mit einem Stromaggregat nach einem der vorhergehenden Ansprüche.

## Claims

1. A power unit, in particular for a hybrid vehicle, comprising a reciprocating piston engine and comprising a generator which is able to be drive-connected thereto, wherein the reciprocating piston engine comprises at least two pistons (3, 4) which are guided in at least two cylinders (1, 2) in a tandem arrangement, and two counter-rotating crankshafts (7, 8) which are connected to the pistons (3, 4) by connecting rods (5, 6) and which are mechanically coupled together in phase,
**characterised in that**
a first generator (11) is driven by the first crankshaft (7) and a second generator (12) is driven by the second crankshaft (8).

2. The power unit according to claim 1,
**characterised in that**
the generators (11, 12) are connected to the respective crankshaft (7, 8) by a toothed gear mechanism or by a traction means.

3. The power unit according to claim 1 or 2, **characterised in that**
the first generator (11) and the second crankshaft (8) as well as the second generator (12) and the first crankshaft (7) in each case rotate in opposing directions at a rotational speed ratio of 2:1, wherein the generators (11, 12) in each case comprise at least one imbalance (13, 14) and act as balancing shafts.

4. The power unit according to one of claims 2 or 3, **characterised in that**
the toothed gear mechanism comprises a toothed crank web which is coupled to a drive pinion (15, 16) of the respective generator (11, 12);
or **in that**
the toothed gear mechanism comprises at least one toothed gear which is connected fixedly in terms of rotation to a shaft pin of the corresponding crankshaft (7, 8), said shaft pin protruding over the main bearing, and which is coupled to a drive pinion of the respective generator (11, 12);
or **in that**
the traction means comprises a chain or a toothed chain or a toothed belt.

5. The power unit according to claim 4,
**characterised in that**
a first traction means (17) connects the first generator (11) to the first crankshaft (7) and a second traction means (18) connects the second generator (12) to the second crankshaft (8).

6. The power unit according to one of the preceding claims,
**characterised in that**
the generators (11, 12) are arranged on either side adjacent to the crankshafts (7, 8), the crankshaft axes span a virtual reference plane through the main bearings and the generator axes are arranged in the reference plane or above the reference plane between the crankshafts and the upper dead centre point of the pistons (3, 4).

7. The power unit according to one of the preceding claims,
**characterised in that**
the cylinders (1, 2) are offset on the counterpressure side and the crankshafts (7, 8) comprise counterweights which are arranged so as to be phase-shifted.

8. The power unit according to one of the preceding claims,
**characterised in that**
the firing interval is a 0° crank angle, in particular in 4-stroke operation.

9. The power unit according to one of the preceding claims,
**characterised in that**
the crankshafts (7, 8) comprise toothed crank webs which are in engagement with one another for coupling the crankshafts (7, 8);
or **in that**
the crankshafts (7, 8) comprise toothed gears which are in engagement with one another for coupling the crankshafts (7, 8), wherein the toothed gears are arranged between the main bearings of the crankshafts (7, 8) or on the shaft journals of the crankshafts (7, 8) which protrude over the respective main bearings.

10. The power unit according to one of the preceding claims,
**characterised in that**
four pistons are guided in four cylinders in a square-four arrangement, two pistons thereof being connected in each case to the same crankshaft by connecting rods, wherein the crank pin offset is 270° and pistons (3, 4) arranged diagonally opposite one another reach the dead centre point simultaneously.

11. The power unit according to one of the preceding claims,
**characterised in that**
each cylinder (1, 2) is in fluidic connection with an outlet channel (19, 20), wherein the outlet channels (19, 20) of the cylinders (1, 2) open into a common central exhaust gas channel (21).

12. The power unit according to claim 11,
**characterised in that** an exhaust gas turbocharger (29) is connected, in particular directly, to the exhaust gas channel (21).

13. The power unit according to one of claims 4 to 12, **characterised in that**
the crankshafts (7, 8) comprise toothed gears (9, 10) or toothed crank webs (34, 35), which are connected together in terms of rotation via a toothed belt (33) which comprises teeth on either side for coupling the crankshafts (7, 8), wherein the toothed belt (33) is wrapped around one of the toothed gears (9, 10) or one of the crank webs (34, 35).

14. The power unit according to claim 13,
**characterised in that**
the toothed belt (33) which comprises teeth on either side comprises 2 to 4 teeth more than the toothing of the toothed gear (10) or the crank web (35) of the second crankshaft (8).

15. A vehicle, in particular hybrid vehicle, comprising a power unit according to one of the preceding claims.

## Revendications

1. Groupe électrogène, notamment pour un véhicule hybride, avec un moteur alternatif et avec un générateur pouvant être relié à celui-ci par une liaison d'entraînement, le moteur alternatif comportant au moins deux pistons (3, 4), qui sont guidés dans au moins deux cylindres (1, 2) dans un agencement en tandem et deux vilebrequins (7, 8) contrarotatifs reliés aux pistons (3, 4) par des bielles (5, 6), les vilebrequins étant couplés mécaniquement en coïncidence de phase
**caractérisé en ce**
**qu'**un premier générateur (11) est entraîné par le premier vilebrequin (7) et un deuxième générateur (12) par le deuxième vilebrequin (8).

2. Groupe électrogène selon la revendication 1,
**caractérisé en ce que**
les générateurs (11, 12) sont reliés au vilebrequin respectif (7, 8) par une boîte de vitesses ou par un moyen de traction.

3. Groupe électrogène selon la revendication 1 ou 2,
**caractérisé en ce que**
le premier générateur (11) et le deuxième vilebrequin (8) ainsi que le deuxième générateur (12) et le premier vilebrequin (7) tournent respectivement en sens contraire avec un rapport de vitesse de rotation de 2:1, les générateurs (11, 12) comportant respectivement au moins un balourd (13, 14) et agissant comme des arbres d'équilibrage.

4. Groupe électrogène selon l'une quelconque des revendications 2 ou 3,
**caractérisé en ce que**
la boîte de vitesses comprend un flasque de vilebrequin denté qui est couplé avec un pignon d'entraînement (15, 16) du générateur respectif (11, 12)
ou **en ce que**
la boîte de vitesses comprend au moins un engrenage qui est relié solidaire en rotation avec des tourillons faisant sailli sur le palier de vilebrequin du vilebrequin correspondant (7, 8) et couplé avec un pignon d'entraînement du générateur respectif (11, 12)
ou **en ce que**
le moyen de traction comprend une chaîne ou une chaîne dentée ou une courroie dentée.

5. Groupe électrogène selon la revendication 4,
**caractérisé en ce**
**qu'**un premier moyen de traction (17) relie le premier générateur (11) au premier vilebrequin (7) et un deuxième moyen de traction (18) relie le deuxième générateur (12) au deuxième vilebrequin (8).

6. Groupe électrogène selon l'une des revendications précédentes,
**caractérisé en ce que**
les générateurs (11, 12) sont disposés sur les deux côtés près des vilebrequins (7, 8), les axes de vilebrequin fixent un plan de référence virtuel par le palier de vilebrequin et les axes de générateur sont disposés dans le plan de référence ou au-dessus du plan de référence entre les vilebrequins et le point mort haut des pistons (3, 4).

7. Groupe électrogène selon l'une quelconque des revendications précédentes,
**caractérisé en ce que**
les cylindres (1, 2) sont limités au côté de contre-pression et les vilebrequins (7, 8) comportent des contre-poids qui sont disposés avec variation de phase.

8. Groupe électrogène selon l'une quelconque des revendications précédentes,
**caractérisé en ce que**
l'intervalle d'allumage comporte un angle de vilebrequin 0°, notamment en fonctionnement à quatre temps.

9. Groupe électrogène selon l'une quelconque des revendications précédentes,
**caractérisé en ce que**
les vilebrequins (7, 8) comportent des flasques de vilebrequin dentés qui sont en prise l'un avec l'autre pour le couplage des vilebrequins (7, 8)
ou **en ce que**
les vilebrequins (7, 8) comportent des engrenages qui sont en prise les uns avec les autres pour le couplage des vilebrequins (7, 8), les engrenages étant disposés entre les paliers de vilebrequin des vilebrequins (7, 8) ou sur les tourillons des vilebrequins (7, 8) en saillie sur les paliers de vilebrequin respectifs.

10. Groupe électrogène selon l'une quelconque des revendications précédentes,
**caractérisé en ce que**
quatre pistons sont guidés dans quatre cylindres dans un agencement carré (square-four) dont deux pistons sont respectivement reliés par des bielles au même vilebrequin, l'angle de décalage des manetons étant de 270° et les pistons (3, 4) disposés diagonalement opposés atteignant simultanément le point mort.

11. Groupe électrogène selon l'une quelconque des revendications précédentes,
**caractérisé en ce que**
chaque cylindre (1, 2) est relié en fluide à un conduit d'échappement (19, 20), les conduits d'échappement (19, 20) des cylindres (1, 2) débouchant dans un conduit de gaz d'échappement commun central (21).

12. Groupe électrogène selon la revendication 11, **caractérisé en ce**
**qu'**un turbocompresseur (29) est relié, notamment directement, au conduit de gaz d'échappement (21).

13. Groupe électrogène selon l'une quelconque des revendication 4 à 12,
**caractérisé en ce que**
les vilebrequins (7, 8) comportent des engrenages (9, 10) ou des flasques de vilebrequin dentés (34, 35) qui sont reliés en rotation les uns aux autres pour le couplage des vilebrequins (7, 8) par une courroie dentée (33) des deux côtés, la courroie dentée (33) entourant un des engrenages (9, 10) ou un des flasques de vilebrequin (34, 35).

14. Groupe électrogène selon la revendication 13, **caractérisé en ce que**
la courroie dentée (33) dentée des deux côtés comporte 2 à 4 dents de plus que la denture de l'engrenage (10) ou du flasque de vilebrequin (35) du deuxième vilebrequin (8).

15. Véhicule, notamment véhicule hybride, avec un groupe électrogène selon l'une quelconque des revendications précédentes.
